# EUROPÄISCHE PATENTSCHRIFT

(11) **EP 0 796 394 B1**
(45) Veröffentlichungstag und Bekanntmachung des Hinweises auf die Patenterteilung: **04.10.2001**
(21) Anmeldenummer: 95940205.8
(22) Anmeldetag: 18.11.1995
(51) Int. Cl.: F04B 9/04

(54) **RADIALKOLBENMASCHINE**
RADIAL PISTON ENGINE
MOTEUR A PISTONS RADIAUX

(30) Priorität: 09.12.1994 DE 4443868
(43) Veröffentlichungstag der Anmeldung: 24.09.1997
(73) Patentinhaber: Continental Teves AG & Co. oHG, 60488 Frankfurt (DE)
(72) Erfinder: STEFFES, Helmut, D-65795 Hattersheim (DE)
(86) Internationale Anmeldenummer: EP9504543
(87) Internationale Veröffentlichungsnummer: WO9618035

(56) Entgegenhaltungen:
- DE-B- 1 009 487
- DE-B- 1 922 885
- FR-A- 1 417 269
- GB-A- 763 095
- US-A- 2 324 291
- US-A- 2 936 632

## Beschreibung

Die Erfindung betrifft eine Radialkolbenmaschine, insbesondere eine Radialkolbenpumpe für Kraftfahrzeugbremsanlagen mit Radschlupf- und Fahrstabilitätsregelung nach dem Oberbegriff des Anspruchs 1.

Aus der US 2,324,291 ist bereits eine Radialkolbenmaschine bekanntgeworden, die über einen sternförmigen Mitnehmer verfügt und an dem sternförmig in einem Gehäuse verteilte Radialkolben anliegen. Der Mitnehmer wird zur Führung der Radialkolben auf die stempelförmigen Ansätze der Radialkolben aufgeschoben, so daß quasi ein formschlüssiges Umklammern der Kolbenstempel erfolgt, so daß bei Drehung eines im Mitnehmer angeordneten Exzentergetriebes die Bewegung des Mitnehmers der Exzenterbewegung folgt. Dabei entsteht infolge der vorgeschlagenen Anordnung der Radialkolben am Mitnehmer sowie der Anordnung des Mitnehmers gegenüber dem Exzenter eine Relativbewegung zwischen den Kontaktflächen der Kolbenstempel und dem Mitnehmer, die infolge Reibung an den Kontaktflächen und Kippmomentenwirkung der Radialkolben im Gehäuse die Pumpenleistung mindert und den Mitnehmer zu einer Umklammerung der Pumpenstempel zwingt, die sich negativ auf die Festigkeit des Mitnehmers auswirkt.

In der GB-A-763 095 wird ein Mitnehmer für eine Radialkolbenpumpe vorgestellt, der zur Montage in Radialrichtung zweiteilig ausgeführt ist und das Exzentergetriebe umklammert. Die Relativbewegung zwischen dem Mitnehmer und dem Exzentergetriebe wird durch ein Radialspiel gewährleistet, das als sichelförmiger Spalt ausgeführt ist. Der damit als Halbschalen ausgeführte Mitnehmer ist hinsichtlich seiner Materialstärke derart zu bemessen, daß die durch Schrauben hervorgerufene Zugbeanspruchung sowohl mechanisch als auch geometrisch vom Mitnehmer aufgenommen werden kann. Dementsprechend baut der Mitnehmer groß und schwer. Überdies ist er nur in Radialrichtung montagefähig, da er mit den Kolben verschraubt ist.

Daher ist es die Aufgabe der Erfindung, eine Radialkolbenmaschine der angegebenen Art dahingehend zu verbessern, daß mit möglichst einfachen, kostengünstigen und funktionssicheren Mitteln die aus dem genannten Stand der Technik bekannten Nachteile vermieden werden.

Diese Aufgabe wird erfindungsgemäß durch die kennzeichnenden Merkmale des Patentanspruchs 1 gelöst.

Eine besonders günstige konstruktive Gestaltung des Mitnehmers ergibt sich aus den Merkmalen des Patentanspruchs 2, wonach zwischen dem Mitnehmer und dem Exzentergetriebe ein sichelförmiger Splat besteht, der sich quer zur Kolbenachse im Mitnehmer erstreckt und dem peripheren Verlauf der Exzenterkurve entspricht. Die auf den Mitnehmer eingeleitete Kolbenkraft führt im Mitnehmer zu einem stetigen mechanischen Spannungsverlauf, so daß die Krafteinleitung vom Radialkolben auf den kleinsten Querschnitt des Mitnehmers mit gleichmäßigem Spannungsanstieg und ohne die Gefahr von kritischer Spannungsüberhöhung im kleinsten Querschnitt des Mitnehmers erfolgt.

Um eine sichere, formschlüssige Befestigung des Radialkolbens am Mitnehmer zu gewährleisten, wird gemäß Anspruch 3 vorgeschlagen, daß der Mitnehmer mit einer seitlichen Aussparung versehen ist, so daß der Mitnehmer von der Seite kommend auf den Endabschnitt

Eine besonders einfache Möglichkeit zur Befestigung des Radialkolbens am Mitnehmer ergibt sich durch die gabelförmige Öffnung des Mitnehmers im Bereich seines Fortsatzes, so daß eine sichere und dennoch einfache formflüssige Verbindung zustande kommt.

In Anspruch 5 wird vorgeschlagen, daß die Bewegung des Mitnehmers ausschließlich translatorisch und synchron mit der translatorischen Bewegung des Radialkolbens erfolgt, wozu in Richtung der Kolbenachse der Mitnehmer mit dem Radialkolben spielfrei und quer zur Kolbenachse spielbehaftet ausgerichtet ist. Hierdurch ergibt sich ein geräusch- und verschleißarmer Betrieb der Radialkolbenmaschine.

Durch die gemäß den Merkmalen im Anspruch 6 vorschlagene starre Verbindung zwischen dem Mitnehmer und dem Ende des Radialkolbens werden die auf den Radialkolben einwirkenden Axialkräfte des Kolbens über beide Flanken symmetrisch verteilt in den Mitnehmer eingeleitet, so daß dieser ohne eine zusätzliche Beanspruchung des Exzentergetriebes die Kräfte aufnimmt. Der Mitnehmer ist hinsichtlich seiner Festigkeit derart steif bemessen, daß er sowohl die aus diametraler Richtung auf ihn einwirkende Kolbenkräfte als auch die vom Exzentergetriebe ausgeübte Betätigungskraft verformungsfrei aufnehmen kann.

Weitere Merkmale, Vorteile und Anwendungsmöglichkeiten der Erfindung ergeben sich aus der nachfolgenden Beschreibung eines Ausführungsbeispieles.

Es zeigen:
- Fig. 1: einen Längsschnitt durch den Mitnehmer und das Exzentergetriebe,
- Fig. 2: eine Seitenansicht der zu Fig. 1 angegebenen Merkmale.

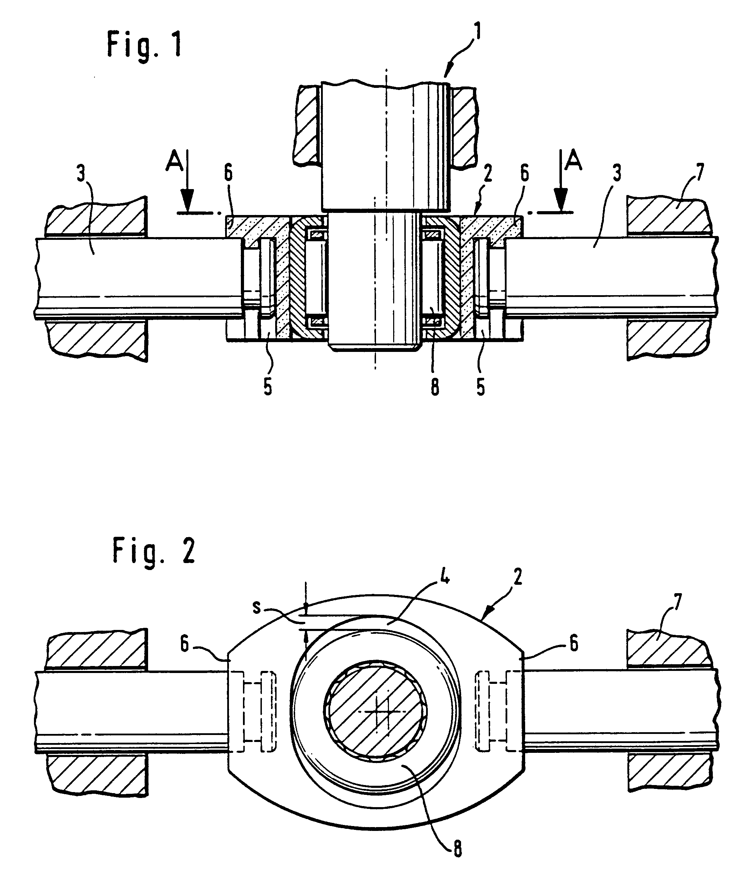

Die Fig. 1 zeigt in schematischer Darstellung eine doppelflutige Radialkolbenpumpe, die über ein Exzentergetriebe 1 und einen Mitnehmer 2 die diametral angeordneten Radialkolben 3 in einem Gehäuse 7 betätigt. Das Exzentergetriebe 1 besteht aus einer Exzenterwelle mit auf dem Wellenexzenter aufgesetztem Nadellager 8. Der Mitnehmer 2 ist in Richtung der Kolbenachse auf den Lagerring des Nadellagers 8 spielfrei aufgeschoben und hält in jeweils einer nutförmigen Aussparung 5 zu beiden Seiten des Exzentergetriebes 1 die Enden der Radialkolben 3. Hierzu weisen die Radialkolben 3 Ringnuten auf, so daß diese im Zusammenwirken mit den Aussparungen 5 einen Formschluß herstellen. Die in der Abbildung nach unten zeigende Seitenfläche des Mitnehmers 2 ist mit einem offenen Ausschnitt versehen, so daß sich eine besonders einfache Montage des Mitnehmers 2 an den diametral angeordneten Radialkolben 3 ergibt, die in der Regel bereits als vormontierte Einheit im Gehäuse ausgerichtet sind. Der Mitnehmer 2 kann sowohl als Einzelteil wie auch als vormontierte Einheit mit dem Exzentergetriebe 1 in die Öffnung des Gehäuses 7 eingeführt werden, bis er formschlüssig mit den Radialkolben 3 in Eingriff steht. Vorzugsweise ist der Mitnehmer 2 nahezu spielfrei in Kolbenrichtung auf dem Exzentergetriebe 1 aufgesetzt, so daß die Radialkolben 3 synchron der Bewegung des Exzentergetriebes 1 folgen können.

Die Fig. 2 zeigt eine Seitenansicht der in Fig. 1 beschriebenen Einzelheiten in Fügerichtung des Exzentergetriebes 1 mit dem Mitnehmer 2 im Gehäuse 7. Der Mitnehmer 2 weist in Richtung der Kolbenachse eine im wesentlichen oval gesteckte Außenkontur auf, in die gleichfalls quer zur Kolbenachse eine oval gestreckte Öffnung eingebracht ist, um das Exzentergetriebe 1 aufzunehmen. In Richtung der Kolbenachse liegt das Exzentergetriebe 1 spielfrei in der ovalen Öffnung des Mitnehmers 2 an. Quer zur Kolbenachse befindet sich zwischen dem Exzentergetriebe und dem Mitnehmer ein Radialspiel s, das dem Hub der beiden Radialkolben 3 bzw. dem Hub des Wellenexzenters entspricht. Durch die Ovalität der Öffnung und dem im wesentlichen durch den Lagerring des Exzentergetriebes 1 vorgegebenen Spalt 4, ergibt sich in der abbildungsgemäßen Kolbenstellung eine sichelförmige Öffnung des Spaltes 4, die in Abhängigkeit von der Drehbewegung des Exzentergetriebes 1 beiderseits der Kolbenachse abwechselnd verkleinert bzw. bis auf das Radialspiel s vergrößert wird. Der Lagerring des Exzentergetriebes 1 beschreibt hierbei in der ovalen Öffnung des Mitnehmers 2 eine Kurvenbahn, die der Exzenterbewegung entspricht. Der Mitnehmer 2 ist beiderseits des Exzentergetriebes 1 zur Abstützung der beiden Radialkolben 3 relativ steif ausgebildet, wozu sich in Richtung der Radialkolben 3 jeweils ein die Aussparung 5 aufnehmender Fortsatz 6 ergibt, der die auf die Radialkolben 3 einwirkenden Axialkräfte aufnimmt, um diese unter möglichst gleichförmiger Verteilung in Richtung des durch die ovale Öffnung geschwächten Querschnittsbereichs in den Mitnehmer 2 einzuleiten. Der Mitnehmer 2 ist derart steif ausgeführt, daß auf den Lagerring des Nadellagers 8 keine unzulässig hohen Kräfte einwirken, weshalb der Mitnehmer 2 vorzugsweise aus einem Sintermetall oder fertigungstechnisch vorteilhaft aus einem Fließpreßteil hergestellt wird. Durch die entsprechende Materialauswahl und steife Konstruktion des Mitnehmers 2 werden die von außen über die Radialkolben 3 auf den Mitnehmer 2 übertragenen Kräfte ausschließlich in dem Mitnehmer 2 eingeleitet, wobei im statischen Fall die Kolbenkräfte nach Betrag und Richtung ausgeglichen am Mitnehmer 2 wirken. Durch die rein oszillierende Bewegung des Mitnehmers 2 während der Drehbewegung des Exzentergetriebes 1 sind die Radialkolben 3 im Gehäuse querkraftfrei, so daß die Reibverluste und Verschleißerscheinungen der Radialkolben im Gehäuse 7 gering sind. Durch die günstige Führung und Abstützung des Mitnehmers 2 auf dem Lagerring des Exzentergetriebes 1 findet eine reibungsarme Wälzbewegung zwischen dem Wellenexzenter und den Nadeln im Lagerring statt, wobei die zwischen dem Lagerring und der ovalen Öffnung im Mitnehmer 2 entstehende Gleitreibung infolge der geringen Umlaufgeschwindigkeit des Lagerrings ver nachlässigbar gering ist. Somit ist eine Radialkolbenmaschine geschaffen, die sich durch einen besonders einfachen Aufbau, geringe Reibleistungsverluste, sichere Führung und Abstützung der Radialkolben 3 und kleinstmögliche Beanspruchung des Nadellagers 8 auszeichnet.

### Bezugszeichenliste:

- 1: Exzentergetriebe
- 2: Mitnehmer
- 3: Radialkolben
- 4: Spalt
- 5: Aussparung
- 6: Fortsatz
- 7: Gehäuse
- 8: Nadellager
- s: Radialspiel

## Patentansprüche

1. Radialkolbenmaschine, insbesondere Radialkolbenpumpe für Kraftfahrzeugbremsanlage mit Radschlupf- und/oder Fahrstabilitätsregelung, mit Radialkolben (3), die in Richtung der Kolbenachse in einem Gehäuse (7) geführt sind, mit einem Mitnehmer (2), der mit den Radialkolben (3) gekoppelt ist und mit einem Exzentergetriebe (1), das innerhalb des Mitnehmers (2) angeordnet ist, der dem Bewegungsablauf des Exzentergetriebes (1) folgt, wobei quer zur Kolbenachse zwischen dem Exzentergetriebe (1) und dem Mitnehmer (2) ein Radialspiel (s) einstellbar ist, das zumindest dem Hub des Radialkolbens (3) entspricht, **dadurch gekennzeichnet, daß** der Mitnehmer (2) in Richtung der Kolbenachse eine sich oval erstreckende Außenkontur aufweist, in dem sich gleichfalls quer zur Kolbenachse eine das Radialspiel (s) aufweisende ovale Öffnung erstreckt, die das Exzentergetriebe (1) aufnimmt, und **daß** der Mitnehmer (2) in Richtung der Radialkolben (3) mit Fortsätzen (6) versehen ist, die seitliche Aussparungen (5) zur Aufnahme der Radialkolben (3) aufweisen.

2. Radialkolbenmaschine nach Anspruch 1, **dadurch gekennzeichnet, daß** quer zur Kolbenachse zwischen dem Mitnehmer (2) und dem Exzentergetriebe (1) ein sichelförmiger Spalt (4) einstellbar ist.

3. Radialkolbenmaschine nach Anspruch 1 oder 2, **dadurch gekennzeichnet, daß** der Mitnehmer (2) mit seiner seitlichen Aussparung (5) den Radialkolben (3) teilweise an seinem einen Ende formschlüssig umgreift.

4. Radialkolbenmaschine nach einem der vorhergehenden Ansprüche, **dadurch gekennzeichnet, daß** der Mitnehmer (2) an seinem zum Radialkolben (3) hin gerichteten Fortsatz (6) gabelförmig geöffnet ist.

5. Radialkolbenmaschine nach einem der vorhergehenden Ansprüche, **dadurch gekennzeichnet, daß** die Bewegung des Mitnehmers (2) ausschließlich translatorisch und synchron mit der translatorischen Bewegung des Radialkolbens (3) erfolgt, wozu in Richtung der Kolbenachse der Mitnehmer (2) mit dem Radialkolben (3) spielfrei angeordnet ist.

6. Radialkolbenmaschine nach einem der vorhergehenden Ansprüche, **dadurch gekennzeichnet, daß** der Mitnehmer (2) starr am Ende des Radialkolbens (3) verankert ist.

7. Radialkolbenmaschine nach einem der vorhergehenden Ansprüche, **dadurch gekennzeichnet, daß** der Mitnehmer (2) die auf den Radialkolben (3) einwirkende Axialkraft sowie die vom Exzentergetriebe (1) erzeugte Betätigungskraft aufnimmt.

## Claims

1. Radial piston machine, in particular radial piston pump for automotive vehicle brake systems with wheel slip control and/or driving stability control, including radial pistons (3) which are guided in the direction of the piston axis in a housing (7), a driver (2) which is coupled to the radial pistons (3), and an eccentric gear (1) which is arranged inside the driver (2) following the motion sequence of the eccentric gear (1), wherein, perpendicular to the piston axis, a radial clearance (s) which corresponds at least to the stroke of the radial piston (3) is adjustable between the eccentric gear (1) and the driver (2),
**characterized in that** the driver (2) has an oval outside contour in the direction of the piston axis which has an oval opening, also extending perpendicularly to the piston axis, exhibiting the radial clearance (s) and accommodating the eccentric gear (1), and **in that** the driver (2), in the direction of the radial pistons (3), has extensions (6) which include lateral recesses (5) to accommodate the radial pistons (3).

2. Radial piston machine as claimed in claim 1,
**characterized in that**, perpendicular to the piston axis, a sickle-shaped slot (4) is adjustable between the driver (2) and the eccentric gear (1).

3. Radial piston machine as claimed in claim 1 or claim 2,
**characterized in that** the driver (2) with its lateral recess (5) partly embraces one end of the radial piston (3) in positive engagement therewith.

4. Radial piston machine as claimed in any one of the preceding claims,
**characterized in that** the driver (2) is opened like a fork at its extension (6) directed to the radial piston (3).

5. Radial piston machine as claimed in any one of the preceding claims,
**characterized in that** the movement of the driver (2) is exclusively translatory and synchronous with the translatory movement of the radial piston (3), to which effect the driver (2) along with the radial piston (3) is arranged without a clearance in the direction of the piston axis.

6. Radial piston machine as claimed in any one of the preceding claims,
**characterized in that** the driver (2) is rigidly fixed on the end of the radial piston (3).

7. Radial piston machine as claimed in any one of the preceding claims,
**characterized in that** the driver (2) takes up the axial force which acts upon the radial piston (3) and the actuating force which is generated by the eccentric gear (1).

## Revendications

1. Machine de piston radial, notamment pompe à piston radial pour des systèmes de freinage d'automobile avec un dispositif pour régler le glissement de roue et/ou la stabilité de roulage, comportant des pistons (3) radials guidés en sens de l'axe de piston dans une boîte (7), un guide (2) couplé à un piston (3) radial, et un eccentrique (1) disposé à l'intérieur du guide (2) suivant le movement de l'eccentrique (1), un jeu radial étant réglable en sens en tranvers à l'axe de piston entre l'eccentrique (1) et le guide (2), le jeu radial correspondant au moins à la course du piston (3) radial, **caractérisé en ce que** le guide (2) en sens de l'axe de piston comporte un contour extérieur s'étendant en sens ovale, dans lequel s'étend également en sens en trasvers à l'axe de piston une ouverture ovale comportant le jeu radial (s) et accueillant l'eccentrique (1), et que le guide (2) en sens du piston radial (3) est pourvu d'appendices (6) comportant des évidements (5) latérals pour accueillir des pistons (3) radials.

2. Machine de piston radial selon la revendication 1, **caracterisé en ce qu'**une fente (4) sous forme de croissant est réglable en sens en travers à l'axe de piston entre le guide (2) et l'eccentrique (1).

3. Machine de piston radial selon la revendication 1 ou 2, **caracterisé en ce que** le guide (2) avec son évidement (5) lateral partiellement entourne le piston ( 3) radial à l'une de ses extrémités de manière commandée mécaniquement.

4. Machine de piston radial selon l'une des revendications précédentes, **caracterisé en ce que** le guide (2) est ouvert de manière bifurquante à son appendice (6) dirigé vers le piston (3) radial.

5. Machine de piston radial selon l'une des revendications précédentes, **caracterisé en ce que** le mouvement du guide (2) se fait exclusivement de manière translatoire et synchrone avec le mouvement translatoir du piston (3) radial, à quoi le guide (2) avec le piston (3) radial est disposé sans jeu en sens de l'axe de piston.

6. Machine de piston radial selon l'une des revendications précédentes, **caracterisé en ce que** le guide (2) est rigidement ancré à l'extrémité du piston (3) radial.

7. Machine à piston radial selon l'une des revendications précédentes, **caracterisé en ce que** le guide (2) accueille la force axiale agissant sur le piston (3) radial et la force d'actionnement produite par l'eccentrique (1).
